# EUROPÄISCHE PATENTSCHRIFT

(11) **EP 3 221 239 B1**
(45) Veröffentlichungstag und Bekanntmachung des Hinweises auf die Patenterteilung: **10.04.2019**
(21) Anmeldenummer: 15797650.7
(22) Anmeldetag: 18.11.2015
(51) Int. Cl.: B65G 21/20, B65G 43/08

(54) **RF-IDENTIFIKATIONSANORDNUNG FÜR EINEN KETTENFÖRDERER FÜR STÜCKGUT SOWIE KETTENFÖRDERER MIT EINER SOLCHEN RF-IDENTIFIKATIONSANORDNUNG**
RADIO-FREQUENCY IDENTIFICATION ARRANGEMENT FOR A CHAIN CONVEYOR FOR PIECE GOODS AND CHAIN CONVEYOR HAVING SUCH A RADIO-FREQUENCY IDENTIFICATION ARRANGEMENT
SYSTÈME D'IDENTIFICATION RF POUR TRANSPORTEUR À CHAÎNES DE CHARGES ISOLÉES ET TRANSPORTEUR À CHAÎNES COMPRENANT UN SYSTÈME D'IDENTIFICATION RF DE CE TYPE

(30) Priorität: 18.11.2014 DE 202014009109 U; 24.11.2014 DE 202014105645 U
(43) Veröffentlichungstag der Anmeldung: 27.09.2017
(73) Patentinhaber: Flexlink AB, 415 50 Göteborg (SE)
(72) Erfinder: KALTENHÄUSER, Peter, 63329 Egelsbach (DE)
(74) Vertreter: Zacco Sweden AB
(86) Internationale Anmeldenummer: PCT/EP2015/076961
(87) Internationale Veröffentlichungsnummer: WO 2016/079178

(56) Entgegenhaltungen:
- EP-A1- 2 135 823
- WO-A1-00/41148
- WO-A1-2009/047282
- DE-U1- 20 221 641
- DE-U1-202010 017 525
- US-A1- 2007 272 519

## Beschreibung

### Gebiet der Erfindung

Die vorliegende Erfindung betrifft allgemein die Identifikation von Werkstücken bzw. Werkstückträgern, die von einem Kettenförderer gefördert werden, und betrifft insbesondere eine rf-Identifikationsanordnung für einen Kettenförderer für Stückgut sowie einen Kettenförderer mit zumindest einer solchen rf-Identifikationsanordnung.

### Hintergrund der Erfindung

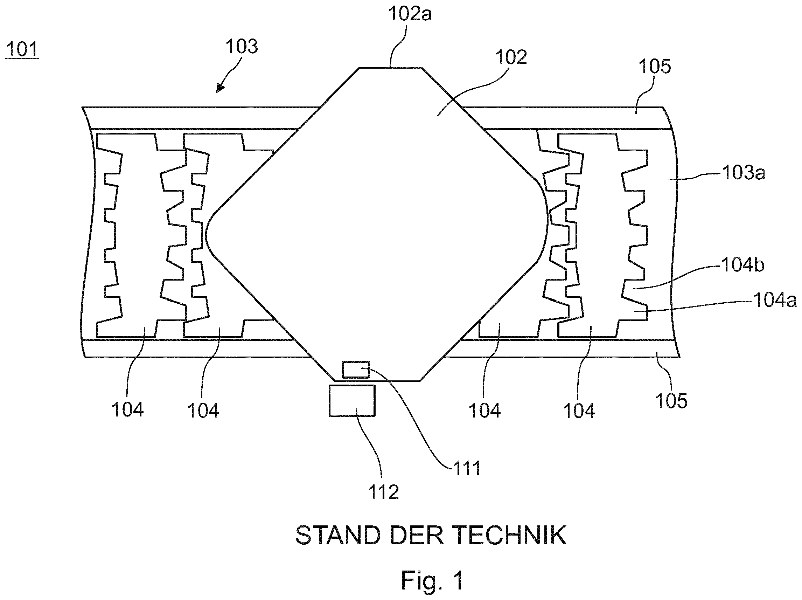

Die Fig. 1 zeigt in einer schematischen Draufsicht einen Ausschnitt aus einem Kettenförderer mit einer rf-Identifikationsanordnung gemäß dem Stand der Technik.

Der Kettenförderer umfasst eine Gliederkette 104, die beispielsweise endlos umlaufend geführt sein kann. Die Gliederkette 104 ist von einer Mehrzahl von Gliederelementen ausgebildet, die jeweils mehrere Zähne 104 und dazwischen ausgebildete Lücken 104b aufweisen, die jeweils entlang einer bogenförmig verlaufenden vorderen und hinteren Stirnseite verteilt angeordnet sind, sodass die Gliederkette 104 horizontal umgelenkt werden kann. Die Gliederkette 104 wird von zwei seitlichen Tragschienen 103 geführt. Auf der Gliederkette 104 ist ein Werkstückträger 102 so abgestützt, dass die beiden abgeflachten Seitenflächen 102a des Werkstückträgers 102 parallel zu den Seitenführungen 105 ausgerichtet sind. An einer der beiden abgeflachten Seitenflächen 102a des Werkstückträgers 102 ist ein RFID-Tag angeordnet, der durch die RFID-Schreib-/Leseeinrichtung 112 zur Identifikation des auf dem Werkstückträger 102 angeordneten Werkstücks (nicht gezeigt) ausgelesen oder ausgelesen und beschrieben werden kann.

Diese Anordnung erfordert eine orientierte Zuführung des Werkstückträgers 102, was zu höheren Kosten und mehr Aufwand für die Orientierung des Werkstückträgers 102 führt, aber auch die Flexibilität beim Fördern von Stückgut in solchen Kettenförderern einschränkt. Insbesondere erfordert eine solche Anordnung eine asymmetrische Anordnung des RFID-Tags und eine exakte Justierung des Kettenförderers, damit die Warenträger unter einem geringen Abstand zwischen dem RFID-Tag und der RFID-Schreib-/Leseeinrichtung vorbeigeführt werden können. Jedenfalls wenn die Werkstückträger nicht asymmetrisch ausgebildet sind, insbesondere in Gestalt von rotationssymmetrischen Werkstückträgern (sogenannten Pucks), müssen die Werkstückträger aus dem Kettenförderer herausgeführt werden, um gelesen oder gelesen und beschrieben werden zu können, was die Kosten erhöht und die Flexibilität weiter einschränkt.

DE 202010017525 U1 offenbart eine Anordnungsvorrichtung zum Halten eines Pucks in einer Anordnungsposition in einem Fördersystem, mit einem Basisabschnitt, einem Schienenabschnitt und einer Drehscheibe, die drehbar in dem Basisabschnitt gehalten ist und eine Puckausnehmung aufweist. Weiterhin ist eine RFID-Schreib/Leseeinheit an einer Steuerungsschiene des Schienenabschnitts vorgesehen. Diese ist jedoch nicht der Unterseite der Gliederkette zugewandt angeordnet, sodass höhere rf-Leistungen zur Identifikation erforderlich sind.

CH 699 992 B1 offenbart ein Förderbandmodul, dessen nähere Einzelheiten in der EP 2070647 B1 offenbart sind, das jedoch kein Tragschienenelement im Sinne der vorliegenden Anmeldung umfasst.

WO 00/41148 A1 offenbart rf-Identifikationsanordnung gemäß dem Oberbegriff von Patentanspruch 1, bei der das Stückgut auf einem umlaufend geführten Transportband gefördert wird. An einer Tragschiene, die in einem Zwischenraum zwischen dem oberen und unteren Trum des Transportbands vorgesehen ist, ist eine rf-Leseeinrichtung zum Lesen von Idendifikationsetiketten angeordnet. Eine Tragschiene im Sinne der vorliegenden Erfindung zum Führen und Abstützen einer Gliederkette ist nicht offenbart.

WO 2009/047282 A1 offenbart eine rf-Identifikationsanordnung für einen Kettenförderer für Stückgut mit zwei angetriebenen Gliederketten, die nebeneinander und parallel zueinander an einer Trageschiene abgestützt und geführt sind. Jedes Kettenglied der Gliederkette ist mit einem RFID-Tag versehen, sodass Daten einem Bereich um einen jeweiligen RFID-Tag herum eindeutig zugeordnet werden können. Allerdings wird das zur Identifikation verwendete rf-Signal seitlich oder über eine relativ große Distanz eingestrahlt, was relativ hohe rf-Signalleistungen erfordert. Weiter wird ein Verfahren zur Überwachung des Abnutzungszustands einzelner Komponenten eines Kettenförderers offenbart.

DE 202 21 641 U1 offenbart Gütertransportsystem zum Zuführen von Papier zu Druckmaschinen. Die Transportwägen sind in Schienen geführt. Seitlich sind an den Schienen rf-Lese-/Schreibeinrichtungen vorgesehen, um die Transportwägen identifizieren zu können. Hier sind jedoch ebenfalls vergleichsweise hohe Leistungen des zur Identifikation verwendeten rf-Signals erforderlich.

DE 20 2010 017525 U1 offenbart einen Kettenförderer mit Werkstückträgers, die als Puck mit einer zylindrischen Basis ausgestaltet sind.

Vor diesem Hintergrund besteht ein weiterer Verbesserungsbedarf bei Kettenförderern der vorgenannten Art.

### Zusammenfassung der Erfindung

Aufgabe der vorliegenden Erfindung ist es, eine verbesserte rf-Identifikationsanordnung für einen Kettenförderer für Stückgut sowie einen verbesserten Kettenförderer mit zumindest einer solchen rf-Identifikationsanordnung bereitzustellen, womit sich insbesondere ein einfacheres und kostengünstigeres Fördern von Stückgut und eine zuverlässige Identifikation des Stückguts erzielen lässt.

Diese Aufgaben werden durch eine rf-Identifikationsanordnung nach Anspruch 1 sowie durch einen Kettenförderer für Stückgut nach Anspruch 3 gelöst. Weitere vorteilhafte Ausführungsformen sind Gegenstand der rückbezogenen Unteransprüche.

Gemäß einem ersten Gesichtspunkt der vorliegenden Erfindung wird eine rf-Identifikationsanordnung für einen Kettenförderer für Stückgut mit einer angetriebenen Gliederkette, insbesondere einer Gliederkette aus einem Kunststoff, bereitgestellt, die ein Tragschienenelement zum Führen und Abstützen der Gliederkette im Bereich der rf-Identifikationsanordnung und eine rf-Leseeinrichtung oder rf-Schreib-/Leseeinrichtung zum berührungslosen Lesen oder Lesen/Schreiben von Information mittels eines rf-Signals aufweist. Erfindungsgemäß weist das das Tragschienenelement einen oberen und unteren Raum auf, wobei zwischen dem Boden des oberen und unteren Raums ein innerer Hohlraum ausgebildet ist, in welchem die rf-Leseeinrichtung oder rf-Schreib-/Leseeinrichtung angeordnet ist, wobei in dem Boden des Tragschienenelements eine Öffnung ausgebildet ist, durch die hindurch das rf-Signal unmittelbar zu der Unterseite der Gliederkette abgestrahlt wird und/oder von dort empfangen wird. Das Tragschienenelement ist als symmetrisches Doppelprofil mit einem rechteckförmigen oberen Raum und einem rechteckförmigen unteren Raum ausgebildet in welchen die Gliederkette formschlüssig geführt ist, wobei der obere und untere Raum jeweils von zwei Verbindungsstegen, die senkrecht von dem Boden abragen und von zwei Querstegen ausgebildet werden, die senkrecht, schieneneinwärts und parallel zu dem Boden von den Verbindungsstegen abragen, wobei zwischen den beiden Querstegen der beiden Räume ein Spalt ausgebildet ist, der sich in Förderrichtung der Gliederkette erstreckt.

Somit ist die rf-Leseeinrichtung oder rf-Schreib-/Leseeinrichtung unmittelbar an einem Boden des Tragschienenelements und einer Unterseite der Gliederkette zugewandt angeordnet. Insbesondere kann die rf-Leseeinrichtung oder rf-Schreib-/Leseeinrichtung unmittelbar auf oder in dem Boden des Tragschienenelements angeordnet sein, bevorzugt mittig auf oder in dem Boden des Tragschienenelements.

Der Hohlraum, der unterhalb des Bodens des oberen Raums ausgebildet ist und in dem die rf-Leseeinrichtung oder rf-Schreib-/Leseeinrichtung angeordnet ist, ermöglicht eine weitere Abschirmung der zur Identifikation verwendeten rf-Strahlung in andere Richtungen als zur Identifikation benötigt, insbesondere wenn das Tragschienenelement elektrisch leitend ist, beispielsweise aus einem Metall oder einer Metalllegierung ausgebildet ist.

Eine solchermaßen ausgebildete rf-Identifikationsanordnung kann problemlos in einen Kettenförderer für Stückgut der vorgenannten Art integriert werden, wobei dann das Tragschienenelement der vorgenannten rf-Identifikationsanordnung mit den Tragschienen des Kettenförderers in geeigneter Weise verbunden ist. Mittels der erfindungsgemäßen rf-Identifikationsanordnung kann ein RFID-Tag, der an dem Werkstück oder einem Werkstückträger angebracht ist, durch die Gliederkette des Kettenförderers hindurch gelesen oder gelesen und beschrieben werden. Insbesondere lässt sich so auch ein vergleichsweise geringer Abstand zwischen der rf-Leseeinrichtung oder rf-Schreib-/Leseeinrichtung und dem RFID-Tag und somit eine vorteilhaft niedrige Leistung des zur Identifikation verwendeten rf-Signals realisieren. Dabei ist erfindungsgemäß grundsätzlich keine zusätzliche Orientierung des Stückguts bzw. Werkstücks oder des Werkstückträgers auf der Gliederkette notwendig, was zu geringeren Kosten und einer erhöhten Flexibilität bei der Förderung von Stückgut führt. Insbesondere können somit erfindungsgemäß auch, in Draufsicht betrachtet, rotationssymmetrisch ausgebildete Werkstückträger (beispielsweise in Gestalt von sog. Pucks) oder Werkstücke zuverlässig gefördert und identifiziert werden.

Dabei ist die rf-Leseeinrichtung oder rf-Schreib-/Leseeinrichtung selbstverständlich so auf oder in dem Boden des Tragschienenelements angeordnet, dass diese nicht in die Bewegungsbahn der Gliederkette hineinragt, sodass eine Berührung der rf-Leseeinrichtung oder rf-Schreib-/Leseeinrichtung durch die Unterseite der Gliederkette oder von Kettengliedern der Gliederkette zuverlässig ausgeschlossen werden kann.

Weil in dem Boden des oberen Raums des Tragschienenelements die Öffnung ausgebildet ist, durch die hindurch das rf-Signal von der rf-Leseeinrichtung oder rf-Schreib-/Leseeinrichtung unmittelbar zu der Unterseite der Gliederkette abgestrahlt wird und/oder von dort empfangen wird, kann die zur Identifikation verwendete rf-Strahlung noch ungehinderter zu dem RFID-Tag gelangen, was insbesondere dann von Vorteil ist, wenn das Tragschienenelement aus einem elektrisch leitenden Metall, insbesondere als Stranggussprofil oder extrudiertes Endlosprofil, ausgebildet ist. Um die Ablagerung von Staub etc. auf der Oberfläche der rf-Leseeinrichtung oder rf-Schreib-/Leseeinrichtung zu unterbinden, kann dabei die Öffnung des Tragschienenelements auch durch eine für die rf-Strahlung transparente Abdeckung, insbesondere eine Kunststofffolie, abgedeckt sein. Die Öffnung in dem Boden des Tragschienenelements kann dabei in eine Aussparung oder einen Hohlraum auf der Innenseite des Tragschienenelements übergehen, um darin die rf-Leseeinrichtung oder rf-Schreib-/Leseeinrichtung zumindest teilweise und bevorzugt vollständig aufzunehmen, sodass die rf-Leseeinrichtung oder rf-Schreib-/Leseeinrichtung allenfalls noch geringfügig und bevorzugt nicht über den Boden des Tragschienenelements hinausragt.

Insbesondere wenn die Öffnung korrespondierend zur Grundfläche der rf-Leseeinrichtung oder rf-Schreib-/Leseeinrichtung ausgebildet ist, kann bei der Befestigung der rf-Leseeinrichtung oder rf-Schreib-/Leseeinrichtung an dem Tragschienenelement visuell auch eine vorbestimmte Ausrichtung der rf-Leseeinrichtung oder rf-Schreib-/Leseeinrichtung in einfacher Weise realisiert werden.

Gemäß einer weiteren Ausführungsform ist das Tragschienenelement als Endlosprofil ausgebildet. Die rf-Leseeinrichtung oder rf-Schreib-/Leseeinrichtung ist in dem inneren Hohlraum bevorzugt vollständig aufgenommen.

Gemäß einer weiteren Ausführungsform erstreckt sich die rf-Leseeinrichtung oder rf-Schreib-/Leseeinrichtung quer zum Tragschienenelement in den inneren Hohlraum des Tragschienenelements hinein. Hierzu ist in einer Seitenwand des Tragschienenelements eine geeignet ausgebildete Durchführung für ein Gehäuse der rf-Leseeinrichtung oder rf-Schreib-/Leseeinrichtung vorgesehen.

Gemäß einem weiteren Gesichtspunkt der vorliegenden Erfindung wird ein Kettenförderer für Stückgut mit einer angetriebenen Gliederkette, insbesondere einer endlos umlaufenden und aus einem Kunststoff hergestellten Gliederkette, bereitgestellt, der zumindest eine rf-Identifikationsanordnung wie vorstehend beschrieben aufweist. Erfindungsgemäß weist der Kettenförderer eine Tragschiene zum Führen und Abstützen der Gliederkette auf, die mit dem Tragschienenelement der jeweiligen rf-Identifikationsanordnung verbunden ist, wobei die rf-Leseeinrichtung oder rf-Schreib-/Leseeinrichtung in den Kettenförderer integriert ist, indem das Tragschienenelement an einer geeigneten Stelle in die Tragschiene des Kettenförderers eingebaut ist. Insbesondere kann das Tragschienenelement der jeweiligen rf-Identifikationsanordnung aus einem identischen Profil ausgebildet sein wie die Tragschiene des Kettenförderers.

Gemäß einer weiteren Ausführungsform ist auf der Gliederkette zumindest ein Werkstückträger angeordnet, der einen RFID-Tag aufweist, wobei der RFID-Tag in einer Aussparung auf der Unterseite des Werkstückträgers angeordnet ist und die Gliederkette so in dem Tragschienenelement der rf-Identifikationsanordnung geführt ist, dass die rf-Leseeinrichtung oder rf-Schreib-/Leseeinrichtung und der RFID-Tag bei der Identifikation, wenn die rf-Strahlung zu dem RFID-Tag abgestrahlt und/oder von diesem zurück gesendet bzw. reflektiert wird, im Querschnitt betrachtet, fluchtend angeordnet sind. Auf diese Weise kann ein minimaler Abstand zwischen der rf-Leseeinrichtung oder rf-Schreib-/Leseeinrichtung und dem RFID-Tag gewährleistet werden.

Gemäß einer weiteren Ausführungsform ist der Werkstückträger, in Draufsicht betrachtet, rotationssymmetrisch ausgebildet, wozu der Werkstückträger zweckmäßig mittig in dem Tragschienenelement geführt wird und der RFID-Tag zweckmäßig mittig an dem Werkstückträger angeordnet ist.

Um Kräfte, die bei einer Stausituation in dem Kettenförderer auftreten, wirkungsvoll abzuleiten, ist gemäß einer weiteren Ausführungsform der Werkstückträger als sog. Puck mit einer zylindrischen Basis und einem an diesem drehbeweglich oder drehstarr gelagerten Ring ausgebildet, sodass eine Rotation des Rings oder Pucks an allen Positionen in dem Kettenförderer möglich ist, ohne die Kraft von anderen Pucks aufnehmen zu müssen.

Gemäß einer weiteren Ausführungsform weist der Werkstückträger weiterhin zumindest einen Sensor zur berührungslosen Bestimmung der Positionierung des Werkstückträgers auf der Gliederkette und zum Tragschienenelement auf, und zwar mittels eines Sensorrings aus Metall, der in der Mantelfläche des Werkstückträgers umlaufend eingearbeitet ist. Die Detektion dieses Sensorrings und damit des Werkstückträgers erfolgt dabei mittels eines induktiv arbeitenden Detektors. Somit kann insbesondere auch in jeder beliebigen Drehstellung des Werkstückträgers zuverlässig detektiert werden.

Ein weiterer Gesichtspunkt der vorliegenden Erfindung betrifft die Verwendung einer rf-Identifikationsanordnung, wie vorstehend beschrieben, bzw. eines Kettenförderers für Stückgut mit zumindest einer solchen rf-Identifikationsanordnung, wie vorstehend beschrieben, zur Identifikation von Werkstücken bzw. Werkstückträgern, die von einem Kettenförderer gefördert werden.

### Figurenübersicht

Nachfolgend wird die Erfindung in beispielhafter Weise und unter Bezugnahme auf die beigefügten Figuren beschrieben, woraus sich weitere Merkmale, Vorteile und zu lösende Aufgaben ergeben werden. Es zeigen:
- Fig. 1: in einer schematischen Draufsicht einen Ausschnitt aus einem Kettenförderer mit einer rf-Identifikationsanordnung gemäß dem Stand der Technik;
- Figuren 2a bis 2d: eine rf-Identifikationsanordnung für einen Kettenförderer für Stückgut gemäß der vorliegenden Erfindung;
- Fig. 3a: eine Draufsicht auf eine rf-Identifikationsanordnung gemäß einer weiteren Ausführungsform gemäß der vorliegenden Erfindung; und
- Fig. 3b: die rf-Identifikationsanordnung gemäß der Fig. 3a in einer perspektivischen Draufsicht.

In den Figuren bezeichnen gleiche Bezugszeichen identische oder im Wesentlichen gleichwirkende Elemente oder Gruppen von Elementen.

### Ausführliche Beschreibung von bevorzugten Ausführungsbeispielen

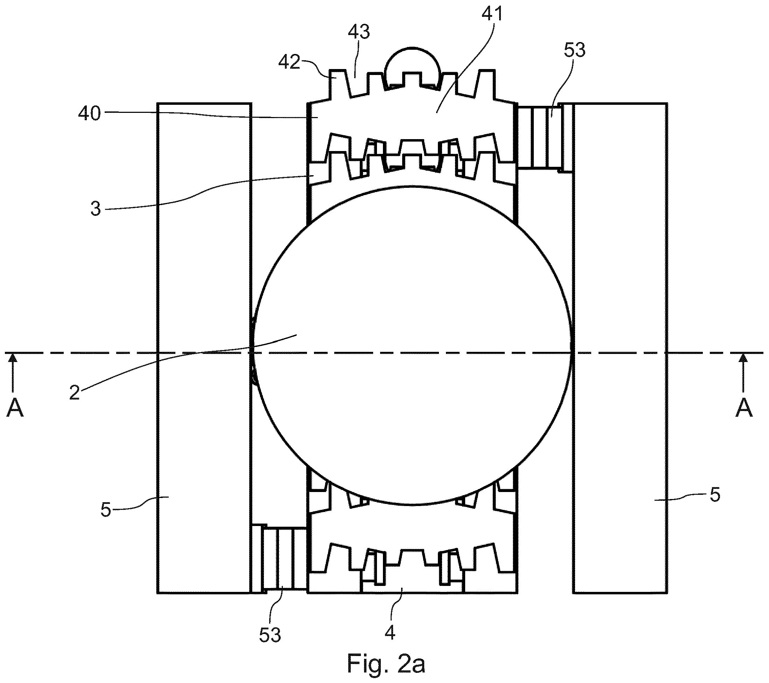

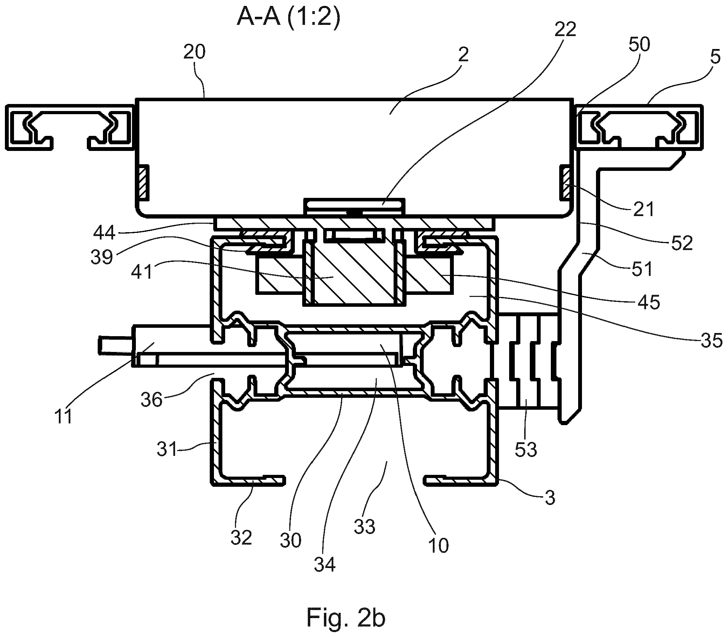

Die Figuren 2a bis 2d zeigen in einer Draufsicht, in einem Querschnitt entlang A-A gemäß der Fig. 2a, in einem weiteren Querschnitt sowie in einer Seitenansicht eine rf-Identifikationsanordnung für einen Kettenförderer für Stückgut gemäß der vorliegenden Erfindung. Die rf-Identifikationsanordnung umfasst gemäß den Figuren 2a und 2b ein Tragschienenelement 3, eine darin axial beweglich geführte und abgestützte Gliederkette 4 sowie zwei Seitenführungen 5, die seitlich oberhalb des Tragschienenelements 3 angeordnet sind und sich parallel zur Förderrichtung erstrecken, um die Gliederkette mittels der Seitenflächen 50 seitlich zu führen. Das Tragschienenelement 3 ist als Endlosprofil aus einem Metall oder einer Metalllegierung ausgebildet, das bevorzugt identisch zu dem Profil der Tragschiene eines Kettenförderers (nicht dargestellt) ausgebildet ist, in welchem die Gliederkette 4 endlos umlaufend geführt und mehrfach umgelenkt wird.

Hierzu weist die Gliederkette 4 eine Mehrzahl von miteinander gekoppelten Kettengliedern 40 auf, die jeweils aus einem T-förmigen Grundkörper 41 bestehen, an dessen oberem Ende eine Tragfläche 44 zum Abstützen des zu transportierenden Stückguts, insbesondere Werkstück oder Werkstückträger, vorgesehen ist. Die Tragfläche 44 weist mehrere Zähne 42 und zwischen diesen ausgebildete Lücken 43 auf, die jeweils entlang einer bogenförmig verlaufenden Linie ausgebildet sind, wobei die Stirnseiten der Zähne 42 jeweils fluchtend entlang einer Senkrechten auf die Seitenführung 5 ausgerichtet sind. Vom unteren Ende des T-förmigen Grundkörpers 41 ragen zwei Querbolzen 45 senkrecht ab.

Das Tragschienenelement 3 ist als symmetrisches Doppelprofil mit einem rechteckförmigen oberen Raum 35 und einem rechteckförmigen unteren Raum 33 ausgebildet, der jeweils von zwei Verbindungsstegen 31, die senkrecht von dem Boden 30 abragen und von zwei Querstegen 32 ausgebildet werden, die senkrecht, schieneneinwärts und parallel zu dem Boden 30 von den Verbindungsstegen 31 abragen. Zwischen den beiden Querstegen 32 der beiden Räume 33, 35 ist ein Spalt ausgebildet, der sich in Förderrichtung der Gliederkette 4 erstreckt.

In dem so ausgebildeten oberen Raum 35 ist die Gliederkette 4 formschlüssig geführt. Hierzu umgreifen die Tragflächen 44 und Querbolzen 45 jeweils die Querstege 32 des Tragschienenelements 3. Zur Minderung der Reibung zwischen der Gliederkette 4 und dem Tragschienenelement 3 ist auf die vorderen Enden der Querstege 32 ein U-förmiges Gleitschienenprofil 39 aufgesteckt, mit einer geeignet niedrigen Reibpaarung mit dem Material der Gliederkette 4. Auf diese Weise werden die Grundkörper 41 der Gliederkette in dem Spalt zwischen den Querstegen 32 seitlich geführt. Die Querbolzen 45 verhindern ein Abheben der Gliederkette von dem Tragschienenelement 3 und der Tragschiene des Kettenförderers (nicht gezeigt), beispielsweise im Falle einer vertikalen Umlenkung der Gliederkette 4.

Der untere Raum 33 des Tragschienenelements 3 und der Tragschiene des Kettenförderers kann in entsprechender Weise zum Führen eines unteren Trums einer endlos umlaufend geführten Gliederkette verwendet werden, ist grundsätzlich jedoch nicht unbedingt notwendig.

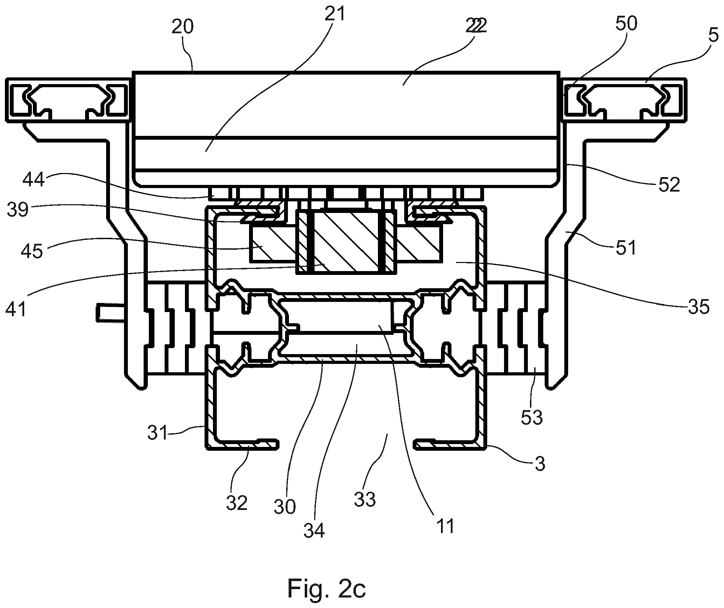

Zur seitlichen Führung des Werkstückträgers 2 sind ferner zwei Seitenführungen 5 seitlich oberhalb des Tragschienenelements 3 angeordnet. Die Seitenführungen 5 sind auf im Wesentlichen L-förmig ausgebildeten Verbindungsstegen 51 befestigt, die über horizontale Verbindungsstege 53 mit dem Tragschienenelement 3 verbunden sind. Erkennbar ist in den Figuren 2b und 2c, wie der Werkstückträger 2 weiterhin von den vertikalen Führungsflächen 52 der Verbindungsstege 51 seitlich geführt wird.

Zwischen dem oberen Raum 35 und dem unteren Raum 33 ist ein rechteckförmiger, innerer Hohlraum 34 ausgebildet, der von den beiden Böden 30 der beiden Räume 33, 35 sowie von inneren Seitenwänden des Tragschienenelements 3 eingeschlossen wird. In diesen inneren Hohlraum 34 ist von außerhalb des Tragschienenelements 3 das Gehäuse 11 eingeführt, an dessen vorderem Ende eine rf-Leseeinrichtung oder rf-Schreib-/Leseeinrichtung 10 zur Identifikation mittels rf-Strahlung angeordnet ist. Gemäß der Fig. 2b sind die rf-Leseeinrichtung oder rf-Schreib-/Leseeinrichtung 10 und der Grundkörper 41 der Gliederkette 4, in einem Querschnitt betrachtet, mittig zum Tragschienenelement 3 angeordnet. Der innere Hohlraum 34 schirmt die rf-Strahlung in andere Richtungen, als zur Identifikation mittels der rf-Strahlung benötigt, wirkungsvoll ab.

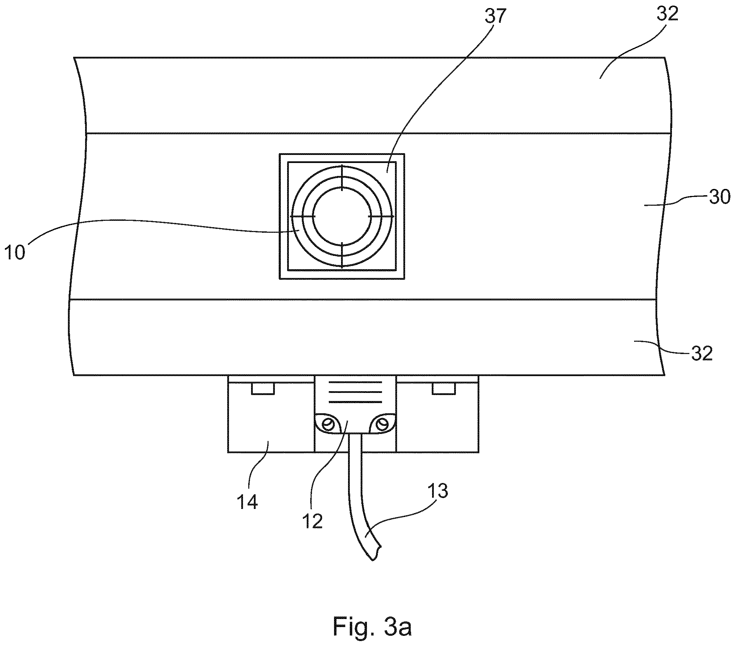

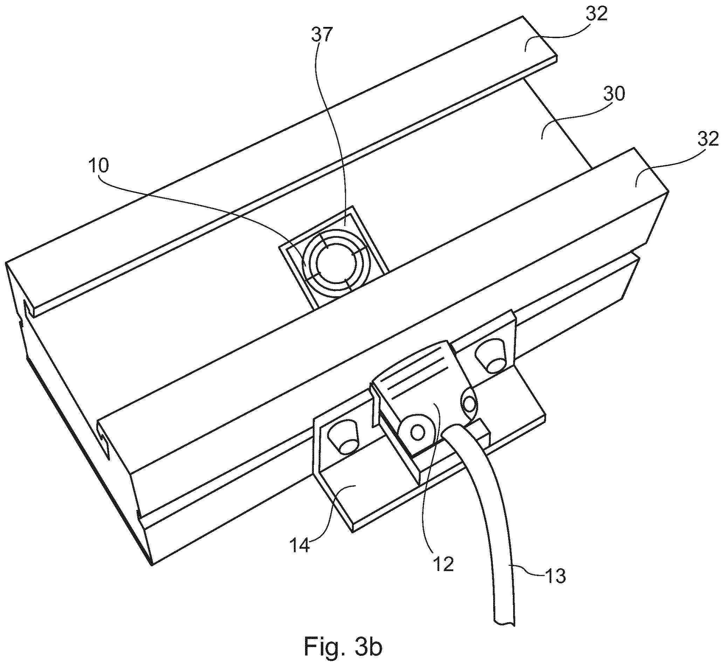

Damit die rf-Strahlung ungehindert hin zu dem Werkstück abgestrahlt und von dort empfangen werden kann, ist im Bereich der rf-Leseeinrichtung oder rf-Schreib-/Leseeinrichtung 10 entweder eine Öffnung im Boden 30 des Tragschienenelements 3 vorgesehen, wie mit dem Bezugszeichen 37 in der Fig. 3 dargestellt, oder das Material des Tragschienenelements 3 ist entweder schwächer ausgebildet oder durch eine für die verwendete rf-Strahlung transparente Abdeckung ersetzt, beispielsweise durch eine Kunststofffolie.

Auf der Gliederkette 4 ist ein Werkstückträger 2 abgestützt, der bei dem dargestellten Ausführungsbeispiel als sog. Puck ausgebildet ist, der eine zylindrische Basis und einen an diesem drehbeweglich oder drehstarr gelagerten Ring aufweist. In einer Aussparung auf der Unterseite des Werkstückträgers 2 ist ein RFID-Tag 22 vorgesehen, der zur Identifikation des von dem Werkstückträger 2 getragenen Werkstücks in bekannter Weise dient. Hierzu umfasst der RFID-Tag 22 eine Antenne, einen analogen Schaltkreis zum Empfangen und Senden von rf-Signalen, einen digitalen Schaltkreis sowie einen permanenten Speicher, der auch mehrfach beschreibbar ausgelegt sein kann. Wenn gemäß der Fig. 2b der Werkstückträger 2 an der rf-Leseeinrichtung oder rf-Schreib-/Leseeinrichtung 10 vorbeigeführt wird, sind RFID-Tag 22 und rf-Leseeinrichtung oder rf-Schreib-/Leseeinrichtung 10, im Querschnitt betrachtet, fluchtend übereinander angeordnet. Dabei entspricht der Abstand zwischen der rf-Leseeinrichtung oder rf-Schreib-/Leseeinrichtung 10 und dem RFID-Tag 22 im Wesentlichen der Höhe des oberen Raums 35. Bevorzugt liegt der Abstand zwischen der rf-Leseeinrichtung oder rf-Schreib-/Leseeinrichtung 10 und dem RFID-Tag 22 des Werkstückträgers 2 im Bereich zwischen dem 0,9-Fachen bis 1,5-Fachen der Höhe des oberen Raums 35, bevorzugter im Bereich zwischen dem 0,9-Fachen bis 1,2-Fachen der Höhe des oberen Raums 35.

Gemäß der Fig. 2c ist der Werkstückträger, im Querschnitt betrachtet, rotationssymmetrisch ausgebildet und auf dem Außenumfang des Werkstückträgers 2 ein umlaufender Sensorring 21 vorgesehen, um die Position des Werkstückträgers 2 auf der Gliederkette 4 zum Tragschienenelement 3 berührungslos zu bestimmen, insbesondere induktiv, oder mittels rf-Strahlung, die grundsätzlich auch durch die rf-Leseeinrichtung oder rf-Schreib-/Leseeinrichtung 10 des Tragschienenelements 3 abgestrahlt und/oder detektiert werden kann.

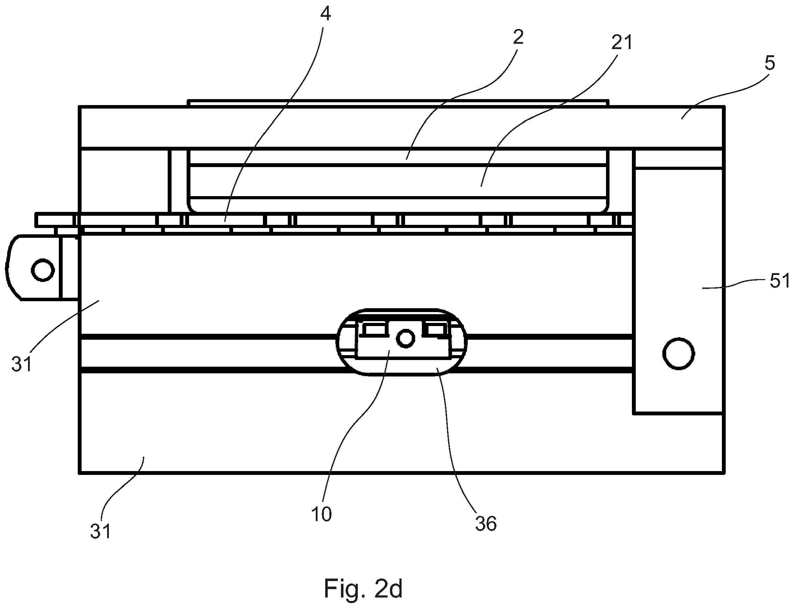

Die Fig. 2d zeigt die rf-Identifikationsanordnung in einer Seitenansicht. Erkennbar ist, dass die rf-Leseeinrichtung oder rf-Schreib-/Leseeinrichtung 10 in den Freiraum 36 auf der Seitenfläche des Tragschienenelements 3 hineinragt.

Die Fig. 3a zeigt eine Draufsicht auf eine rf-Identifikationsanordnung gemäß einer weiteren Ausführungsform gemäß der vorliegenden Erfindung, während die Fig. 3b diese rf-Identifikationsanordnung in einer perspektivischen Draufsicht darstellt. Gemäß den Figuren 3a und 3b ist im Boden 30 des Tragschienenelements eine Öffnung 37 ausgebildet, unterhalb von der die rf-Leseeinrichtung oder rf-Schreib-/Leseeinrichtung 10 angeordnet ist. Seitlich ist an dem Tragschienenelement ein L-förmiger Haltewinkel 14 befestigt, der zur Fixierung des Anschlusssteckers 12 und des Kabels 13 dient, über das die rf-Leseeinrichtung oder rf-Schreib-/Leseeinrichtung 10 angesteuert und ausgelesen wird.

Zur Handhabung der Werkstückträger 2 und der von diesen gehaltenen Werkstücke werden in bekannter Weise die RFID-Tags 22 der Werkstückträger 2 mittels rf-Strahlung ausgelesen und auf diese Weise die Werkstückträger 2 oder die von diesen gehaltenen Werkstücke identifiziert. Ergänzend kann hierzu auch die Positionierung des Werkstückträgers 2 mittels des Sensorrings 21 zum Tragschienenelement 3 bestimmt werden. Auf Grundlage der Identifikation des Werkstückträgers 2 und somit des von diesem gehaltenen Werkstücks wird die weitere Handhabung dann von einer Steuerungseinrichtung, insbesondere einem Microcontroller, gesteuert.

Das Lesen und Beschreiben des RFID-Tags kann erfindungsgemäß durch die Gliederkette hindurch bei geringer Leistung der verwendeten rf-Strahlung erfolgen. Die vorstehend beschriebene rf-Identifikationsanordnung kann dabei problemlos in einen bestehenden Kettenförderer integriert werden, indem das Tragschienenelement an geeigneter Stelle in die Tragschiene des Kettenförderers eingebaut wird. Eine weitere Justierung der rf-Leseeinrichtung oder rf-Schreib-/Leseeinrichtung ist dabei nicht erforderlich, weil die rf-Leseeinrichtung oder rf-Schreib-/Leseeinrichtung beim Einbau des Tragschienenelements in die Tragschiene des Kettenförderers automatisch in einer bekannten Ausrichtung und Orientierung angeordnet ist. Gemäß der vorliegenden Erfindung können somit auch rotationssymmetrische Werkstückträger, Pucks, Hilfswerkstückträger oder Bauteile ohne zusätzliche Orientierung auf der Gliederkette des Kettenförderers gelesen und beschrieben werden.

### Bezugszeichenliste

- 1: Kettenförderer
- 2: Werkstückträger
- 3: Tragschienenelement
- 4: Gliederkette
- 5: Seitenführung

- 10: RFID-Schreib-/Leseeinrichtung
- 11: Gehäuse von RFID-Schreib-/Leseeinrichtung 10
- 12: Anschlussstecker
- 13: Kabel
- 14: Haltewinkel

- 20: Tragfläche von Werkstückträger 2
- 21: Sensorring
- 22: RFID-Tag

- 30: Boden von Tragschienenelement 3
- 31: vertikaler Verbindungssteg
- 32: horizontaler Quersteg
- 33: unterer Raum von Tragschienenelement 3
- 34: innerer Hohlraum von Tragschienenelement 3
- 35: oberer Raum von Tragschienenelement 3
- 36: seitlicher Freiraum
- 37: Öffnung

- 39: Gleitschienenaufsatz

- 40: Kettenglied der Gliederkette 4
- 41: Grundkörper der Gliederkette 4
- 42: Zahn
- 43: Lücke
- 44: Tragfläche
- 45: Bolzen

- 50: Führungsfläche der Seitenführung 5
- 51: Verbindungssteg
- 52: Führungsfläche von Verbindungssteg 51
- 53: Verbindungssteg

- 101: Kettenförderer
- 102: Werkstückträger
- 102a: abgeflachte Seitenfläche
- 103: Tragschiene
- 103a: Boden der Tragschiene
- 104: Gliederkette
- 104a: Zahn
- 104b: Lücke
- 105: Tragschiene als Seitenführung

- 111: RFID-Tag
- 112: RFID-Schreib-/Leseeinrichtung

## Patentansprüche

1. rf-Identifikationsanordnung für einen Kettenförderer für Stückgut mit einer angetriebenen Gliederkette, umfassend
ein Tragschienenelement (3) zum Führen und Abstützen der Gliederkette (4) im Bereich der rf-Identifikationsanordnung und
eine rf-Leseeinrichtung oder rf-Schreib-/Leseeinrichtung (10) zum berührungslosen Lesen oder Lesen/Schreiben von Information mittels eines rf-Signals, wobei die rf-Leseeinrichtung oder rf-Schreib- /Leseeinrichtung (10) unmittelbar an einem Boden (30) des Tragschienenelements (3) und einer Unterseite der Gliederkette (4) zugewandt angeordnet ist, wobei in dem Boden (30) des Tragschienenelements (3) eine Öffnung (37) ausgebildet ist, durch die hindurch das rf-Signal unmittelbar zu der Unterseite der Gliederkette (4) abgestrahlt wird und/oder von dort empfangen wird, **dadurch gekennzeichnet, dass** das Tragschienenelement (3) als symmetrisches Doppelprofil mit einem rechteckförmigen oberen Raum (35) und einem rechteckförmigen unteren Raum (33) ausgebildet ist, in welchen die Gliederkette (4) formschlüssig geführt ist, wobei der obere und untere Raum (33, 35) jeweils von zwei Verbindungsstegen (31), die senkrecht von dem Boden (30) abragen und von zwei Querstegen (32) ausgebildet werden, die senkrecht, schieneneinwärts und parallel zu dem Boden (30) von den Verbindungsstegen (31) abragen, wobei zwischen den beiden Querstegen (32) der beiden Räume (33, 35) ein Spalt ausgebildet ist, der sich in Förderrichtung der Gliederkette (4) erstreckt, wobei zwischen dem Boden des oberen und unteren Raums (33, 35) ein innerer Hohlraum (34) ausgebildet ist, in welchem die rf-Leseeinrichtung oder rf-Schreib-/Leseeinrichtung (10) angeordnet ist.

2. rf-Identifikationsanordnung nach Anspruch 1, wobei sich die rf-Leseeinrichtung oder rf-Schreib-/Leseeinrichtung (10) quer zum Tragschienenelement (3) in den inneren Hohlraum (34) hinein erstreckt.

3. Kettenförderer für Stückgut mit einer angetriebenen Gliederkette, **gekennzeichnet durch** zumindest eine rf-Identifikationsanordnung nach einem der vorhergehenden Ansprüche, wobei der Kettenförderer eine Tragschiene zum Führen und Abstützen der Gliederkette (4) aufweist, die mit dem Tragschienenelement (3) der rf-Identifikationsanordnung verbunden ist, wobei die rf-Leseeinrichtung oder rf-Schreib-/ Leseeinrichtung (10) in den Kettenförderer integriert ist, indem das Tragschienenelement (3) an einer geeigneten Stelle in die Tragschiene des Kettenförderers eingebaut ist.

4. Kettenförderer nach Anspruch 3, wobei die Gliederkette (4) aus einer Mehrzahl von Kettengliedern (40) besteht, die jeweils aus einem im Querschnitt T-förmigen Grundkörper (41) ausgebildet sind, wobei der T-förmige Grundkörper (41) an seinem oberen Ende eine Tragfläche (44) zum Abstützen des Stückguts oder eines Stückgutträgers und an seinem unteren Ende transversale Bolzen (45) aufweist, die in dem jeweiligen Raum (33, 35) des Tragschienenelements (3) geführt sind.

5. Kettenförderer nach Anspruch 3 oder 4, wobei auf der Gliederkette (4) zumindest ein Werkstückträger (2) angeordnet ist, der einen RFID-Tag (22) aufweist, der mittels der rf-Leseeinrichtung ausgelesen oder mittels der rf-Schreib-/Leseeinrichtung (10) beschrieben oder ausgelesen werden kann.

6. Kettenförderer nach Anspruch 5, wobei der RFID-Tag (22) in einer Aussparung auf der Unterseite des Werkstückträgers (2) angeordnet ist, wobei die Gliederkette (4) so in dem Tragschienenelement (3) der rf-Identifikationsanordnung geführt ist, dass die rf-Leseeinrichtung oder rf-Schreib-/Leseeinrichtung (10) und der RFID-Tag (22) im Querschnitt betrachtet fluchtend angeordnet sind.

7. Kettenförderer nach Anspruch 5 oder 6, wobei der Werkstückträger (2), in Draufsicht betrachtet, rotationssymmetrisch ausgebildet ist.

8. Kettenförderer nach Anspruch 7, wobei der Werkstückträger (2) als Puck mit einer zylindrischen Basis und einem an diesem drehbeweglich oder drehstarr gelagerten Ring ausgebildet ist.

9. Kettenförderer nach einem der Ansprüche 5 bis 8, wobei der Werkstückträger (2) weiterhin zumindest einen Sensor (21) zur berührungslosen Bestimmung der Positionierung des Werkstückträgers (2) auf der Gliederkette (4) zum Tragschienenelement (3) aufweist.

10. Kettenförderer nach einem der Ansprüche 5 bis 9, wobei ein Abstand zwischen der rf-Leseeinrichtung oder rf-Schreib-/Leseeinrichtung (10) und dem RFID-Tag (22) des Werkstückträgers (2) im Wesentlichen der Höhe eines von dem Tragschienenelement (3) ausgebildeten Raums (33, 35) zum Führen der Gliederkette (4) entspricht.

11. Kettenförderer nach Anspruch 10, wobei der Abstand zwischen der rf-Leseeinrichtung oder rf-Schreib-/Leseeinrichtung (10) und dem RFID-Tag (22) des Werkstückträgers (2) im Bereich zwischen dem 0,9-Fachen und dem 1,5-Fachen der Höhe des von dem Tragschienenelement (3) ausgebildeten Raums (33, 35) und bevorzugter im Bereich zwischen dem 0,9-Fachen und dem 1,2-Fachen der Höhe des von dem Tragschienenelement (3) ausgebildeten Raums (33, 35) liegt.

12. Kettenförderer nach einem der Ansprüche 3 bis 11, weiterhin umfassend zumindest eine Seitenführung (5), die seitlich oberhalb der Tragschiene und/oder des Tragschienenelements (3) angeordnet ist, um den Werkstückträger (2) auf der Gliederkette (4) zu führen.

## Claims

1. RF identification arrangement for a chain conveyor for piece goods having a driven link chain, comprising
a supporting rail element (3) for guiding and supporting the link chain (4) in the area of the RF identification arrangement and
an RF reading device or an RF writing/reading device (10) for the contact-free reading or reading/writing of information by means of an RF signal, wherein the RF reading device or RF writing/reading device (10) is arranged directly on a base (30) of the supporting rail element (3) and faces an underside of the link chain (4),
wherein an opening (37) is formed in the base (30) of the supporting rail element (3), through which opening the RF signal is emitted directly to and/or received from the underside of the link chain (4),
**characterized in that** the supporting rail element (3) is formed as a symmetrical double profile with a rectangular upper space (35) and a rectangular lower space (33), into which the link chain (4) is guided in a positive-locking manner, wherein the upper and lower spaces (33, 35) are each formed by two connecting webs (31) that project perpendicularly from the base (30) and by two transverse webs (32) that project perpendicularly into the rails and parallelly to the base (30) from the connecting webs (31), wherein a gap is formed between the two transverse webs (32) of the two spaces (33, 35), which gap extends in the conveying direction of the link chain (4), wherein an inner cavity (34) is formed between the bases of the upper and lower spaces (33, 35), in which inner cavity the RF reading device or RF writing/reading device (10) is arranged.

2. RF identification arrangement according to claim 1, wherein the RF reading device or RF writing/reading device (10) extends transversely to the supporting rail element (3) into the inner cavity (34).

3. Chain conveyor for piece goods, having a driven link chain, **characterized by** at least one RF identification arrangement according to one of the preceding claims, wherein the chain conveyor features a supporting rail for guiding and supporting the link chain (4), which is connected to the supporting rail element (3) of the RF identification arrangement, wherein the RF reading device or RF writing/reading device (10) is integrated into the chain conveyor by the supporting rail element (3) being installed into the supporting rail of the chain conveyor at a suitable location.

4. Chain conveyor according to claim 3, wherein the link chain (4) consists of a multitude of chain links (40), which are each formed from a base body (41) that is T-shaped in cross-section, wherein the T-shaped base body (41) features at its upper end a supporting surface (44) for supporting the piece goods or a piece goods carrier, and at its lower end transverse bolts (45) that are guided in the respective space (33, 35) of the supporting rail element (3).

5. Chain conveyor according to claim 3 or 4, wherein at least one workpiece carrier (2) is arranged on the link chain (4) and features an RFID tag (22) that can be read out by means of the RF reading device or written to or read out by means of the RF writing/reading device (10).

6. Chain conveyor according to claim 5, wherein the RFID tag (22) is arranged in a recess on the underside of the workpiece carrier (2), wherein the link chain (4) is guided in the supporting rail element (3) of the RF identification arrangement in such a manner that the RF reading device or RF writing/reading device (10) and the RFID tag (22) are arranged in alignment when viewed in cross-section.

7. Chain conveyor according to claim 5 or 6, wherein the workpiece carrier (2) is rotationally symmetrical when viewed from above.

8. Chain conveyor according to claim 7, wherein the workpiece carrier (2) is formed as a puck with a cylindrical base and a ring mounted thereon in a manner rotationally movable or rotationally rigid.

9. Chain conveyor according to one of claims 5 to 8, wherein the workpiece carrier (2) further comprises at least one sensor (21) for the contact-free determination of the positioning of the workpiece carrier (2) on the link chain (4) in relation to the supporting rail element (3).

10. Chain conveyor according to one of claims 5 to 9, wherein a distance between the RF reading device or RF writing/reading device (10) and the RFID tag (22) of the workpiece carrier (2) substantially corresponds to the height of a space (33, 35) formed by the supporting rail element (3) for guiding the link chain (4).

11. Chain conveyor according to claim 10, wherein the distance between the RF reading device or RF writing/reading device (10) and the RFID tag (22) of the workpiece carrier (2) is in the range between 0.9 times and 1.5 times the height of the space (33, 35) formed by the supporting rail element (3) and more preferably in the range between 0.9 times and 1.2 times the height of the space (33, 35) formed by the supporting rail element (3).

12. Chain conveyor according to one of the claims 3 to 11, further comprising at least one side guide (5) arranged laterally above the supporting rail and/or the supporting rail element (3) in order to guide the workpiece carrier (2) on the link chain (4).

## Revendications

1. Système d'identification RF pour un transporteur à chaînes pour des charges isolées, équipé d'une chaîne à maillons, comprenant
un élément de rail support (3) pour guider et soutenir la chaîne à maillons (4) dans la zone du système d'identification RF et
un dispositif de lecture RF ou un dispositif d'écriture/lecture RF (10) pour la lecture ou la lecture/écriture sans contact d'informations au moyen d'un signal RF, le dispositif de lecture RF ou le dispositif d'écriture/lecture RF (10) étant disposé directement au niveau d'un fond (30) de l'élément de rail support (3) et orienté vers une face inférieure de la chaîne à maillons (4),
une ouverture (37) étant réalisée dans le fond (30) de l'élément de rail support (3), à travers laquelle le signal RF est émis directement vers la face inférieure de la chaîne à maillons (4) et/ou est reçu depuis celle-ci,
**caractérisé en ce que** l'élément de rail support (3) est réalisé comme un double profil symétrique pourvu d'un espace supérieur (35) rectangulaire et d'un espace inférieur (33) rectangulaire, dans lesquels la chaîne à maillons (4) est guidée par complémentarité de forme, l'espace supérieur et l'espace inférieur (33, 35) étant formés chacun par deux traverses de liaison (31), qui font saillie perpendiculairement à partir du fond (30) et par deux traverses transversales (32), qui font saillie perpendiculairement, vers l'intérieur du rail et parallèlement au fond (30), à partir des traverses de liaison (31), une fente étant réalisée entre les deux traverses transversales (32) des deux espaces (33, 35), qui s'étend dans le sens de transport de la chaîne à maillons (4), un espace creux interne (34) étant formé entre le fond de l'espace supérieur et de l'espace inférieur (33, 35), dans lequel le dispositif de lecture RF ou le dispositif d'écriture/lecture RF (10) est disposé.

2. Système d'identification RF selon la revendication 1, le dispositif de lecture RF ou le dispositif d'écriture/lecture RF (10) s'étendant transversalement par rapport à l'élément de rail support (3) dans l'espace creux interne (34).

3. Transporteur à chaînes pour des charges isolées présentant une chaîne à maillons entraînée, **caractérisé par** au moins un système d'identification RF selon l'une quelconque des revendications précédentes, le transporteur à chaînes présentant un rail support pour guider et soutenir la chaîne à maillons (4), qui est associée à l'élément de rail support (3) du système d'identification RF, le dispositif de lecture RF ou le dispositif d'écriture/lecture RF (10) étant intégré dans le transporteur à chaînes en ce que l'élément de rail support (3) est monté en un emplacement approprié dans le rail support du transporteur à chaînes.

4. Transporteur à chaînes selon la revendication 3, la chaîne à maillons (4) étant constituée par une multitude d'éléments de maillon (40), qui sont chacun constitués par un corps de base (41) présentant une forme de T en coupe transversale, le corps de base (41) en forme de T présentant, en son extrémité supérieure, une surface support (44) pour soutenir la charge isolée ou un support de charge isolée et, en son extrémité inférieure, des boulons transversaux (45), qui sont guidés dans l'espace respectif (33, 35) de l'élément de rail support (3).

5. Transporteur à chaînes selon la revendication 3 ou 4, au moins un support de pièce (2) étant disposé sur la chaîne à maillons (4), qui présente une étiquette RFID (22), qui peut être lue au moyen du dispositif de lecture RF ou qui peut être écrite ou lue au moyen du dispositif d'écriture/lecture RF (10).

6. Transporteur à chaînes selon la revendication 5, l'étiquette RFID (22) étant disposée dans un évidement sur la face inférieure du support de pièce (2), la chaîne à maillons (4) étant guidée dans l'élément de rail support (3) du système d'identification RF de manière telle que le dispositif de lecture RF ou le dispositif d'écriture/lecture RF (10) et l'étiquette RFID (22) soient disposés de manière alignée lorsqu'on les regarde en coupe transversale.

7. Transporteur à chaînes selon la revendication 5 ou 6, le support de pièce (2), regardé en vue du dessus, étant réalisé avec une symétrie de rotation.

8. Transporteur à chaînes selon la revendication 7, le support de pièce (2) étant conçu comme un palet, présentant une base cylindrique et un anneau logé de manière à pouvoir tourner ou à ne pas pouvoir tourner sur celle-ci.

9. Transporteur à chaînes selon l'une quelconque des revendications 5 à 8, le support de pièce (2) présentant en outre au moins un capteur (21) pour la détermination sans contact du positionnement du support de pièce (2) sur la chaîne à maillons (4) par rapport à l'élément de rail support (3).

10. Transporteur à chaînes selon l'une quelconque des revendications 5 à 9, une distance entre le dispositif de lecture RF ou le dispositif d'écriture/lecture RF (10) et l'étiquette RFID (22) du support de pièce (2) correspondant sensiblement à la hauteur d'un espace (33, 35) formé par l'élément de rail support (3) pour le guidage de la chaîne à maillons (4).

11. Transporteur à chaînes selon la revendication 10, la distance entre le dispositif de lecture RF ou le dispositif d'écriture/lecture RF (10) et l'étiquette RFID (22) du support de pièce (2) étant située dans la plage entre 0,9 fois et 1,5 fois la hauteur de l'espace (33, 35) formé par l'élément de rail support (3) et de préférence dans la plage entre 0,9 fois et 1,2 fois la hauteur de l'espace (33, 35) formé par l'élément de rail support (3).

12. Transporteur à chaînes selon l'une quelconque des revendications 3 à 11, comprenant en outre au moins un guidage latéral (5) qui est disposé latéralement au-dessus du rail support et/ou de l'élément de rail support (3), pour guider le support de pièce (2) sur la chaîne à maillons (4).
